**Europäisches Patentamt**

**European Patent Office**

**Office européen des brevets**

(19)

(11) Publication number: **0 059 485**

**A1**

(12)

# EUROPEAN PATENT APPLICATION

(21) Application number: **82101693.8**

(22) Date of filing: **04.03.82**

(51) Int. Cl.³: **F 16 K 31/363**
**F 16 H 39/44**

(30) Priority: **04.03.81 US 240338**

(43) Date of publication of application:
**08.09.82 Bulletin 82/36**

(84) Designated Contracting States:
**DE FR GB IT**

(71) Applicant: **EATON CORPORATION**
**100 Erieview Plaza**
**Cleveland Ohio 44114(US)**

(72) Inventor: **Ours, David Clifton**
**119 Plum Street**
**Marshall Michigan 49068(US)**

(74) Representative: **Schwan, Gerhard, Dipl.-Ing.**
**Elfenstrasse 32**
**D-8000 München 83(DE)**

(54) **Power shutdown valve for hydrostatic transmission.**

(57) A power shutdown control valve assembly (35) is disclosed for use with a hydrostatic transmission. The valve assembly includes a housing (61) defining a poppet chamber (111, 119) and a valve seat (121). A poppet member (141) is disposed in the poppet chamber and defines a biasing chamber (147) and a poppet surface (145). When the poppet member is closed, the poppet surface includes first and second poppet areas (151, 153) exposed to the fluid inlet (123) and the fluid outlet (65), respectively. A spring means (149) urges the poppet member toward the closed position, but when system pressure acting on a first differential area (151 minus 155) overcomes the force of the spring, the poppet member moves away from the closed position and the second poppet area is also exposed to system pressure, thus biasing the poppet member to its open position. In the open position, the flow path from the inlet to the outlet past the valve seat is restricted sufficiently to maintain a predetermined minimum pressure upstream of the valve seat, while permitting full system flow past the poppet member to the low pressure side of the system. As a result of the present invention, the pump output flow bypasses the motor, but is maintained at the relatively low minimum pressure, rather than at the relatively high relief setting, thereby substantially reducing the amount of power consumed, and heat generated, during operation in the relief or shutdown mode.

FIG. 2

POWER SHUTDOWN VALVE FOR
HYDROSTATIC TRANSMISSION

## BACKGROUND OF THE DISCLOSURE

The present invention relates to hydrostatic transmission control systems, and more particularly, to control valves for such systems which are capable of discontinuing the flow of pressurized fluid to the hydraulic motor when system pressure rises above a predetermined maximum pressure setting.

Hydrostatic transmissions have found many uses on mobile equipment such as agricultural combines, construction equipment, etc. The uses for hydrostatic transmissions in mobile applications may be broadly classified in two groups: vehicle propulsion and power take-off (PTO). Although the present invention may be used on hydrostatic transmissions designed for vehicle propulsion, it is especially advantageous when used on hydrostatic transmissions for PTO applications, and will be described in connection therewith.

A conventional hydrostatic transmission includes a variable displacement hydraulic pump driven by the vehicle engine, a hydraulic motor having an output shaft, and a pair of hydraulic conduits interconnecting the pump and motor. Typically, hydrostatic transmission control systems include a high pressure relief valve operable to communicate fluid from one conduit to the other when system pressure exceeds a predetermined maximum pressure setting. If the pump is of the over-center type, and system pressure may be communicated through either conduit, the system will include a pair of such high pressure relief valves, capable of relieving excess pressure for either direction of system flow.

A major disadvantage of conventional high pressure relief arrangements is that, whenever the system pressure exceeds the maximum pressure setting, the entire system flow may be pumped over the relief valve at a pressure equal to the pressure setting of the relief valve. For example, if the pressure setting of the relief valve is 5000 psi and the system flow, as selected by the operator, is 30 gpm, there would be about 80 hydraulic horsepower pumped over the relief valve and wasted. In addition, the wasted horsepower is converted to heat, i.e., the system hydraulic fluid is heated as it passes over the relief valves. When the system fluid is heated in this manner, it is necessary to provide means for cooling the fluid to prevent the heated fluid from causing damage to the pump and/or the motor.

:On a PTO application for a hydrostatic transmission, it frequently occurs that the accessory device being driven by the transmission becomes jammed, or engages something which places an excessive load on the motor. When this occurs, the system pressure rises above the maximum pressure setting. In some cases, continued operation of the hydraulic motor and the vehicle accessory may result in a hazardous condition, but in any event, there will be a substantial waste of hydraulic horsepower. Also, as mentioned previously, pumping all or most of the selected system flow over the relief valve, at high pressure, causes a substantial increase in the temperature of the hydraulic fluid which may in turn damage some portion of the hydrostatic transmission.

SUMMARY OF THE INVENTION

Accordingly, it is an object of the present invention to provide a hydrostatic transmission control system which eliminates the condition wherein the entire system flow is pumped over the high pressure relief valve whenever system pressure exceeds the maximum pressure setting, and the problems associated therewith.

It is a more specific object of the present invention to provide a control system for a hydrostatic transmission incorporating a control valve operable to discontinue (shutdown) the hydraulic horsepower being communicated to the motor, when system pressure exceeds the relief setting, and to maintain such a shutdown condition until system flow is reduced approximately to zero.

It is another object of the present invention to provide a power shutdown valve for a hydrostatic transmission which is operable, when system pressure exceeds the relief setting, to immediately reduce system pressure to a relatively low level, while maintaining the selected system flow rate, thereby to substantially decrease the total hydraulic horsepower output of the pump during such a shutdown condition.

The above and other objects of the present invention are accomplished by the provision of a control valve assembly for use with a hydrostatic transmission including a fluid pump or fluid motor and high pressure and low pressure fluid conduits to communicate a system flow between the pump and the motor. The control valve assembly comprises a housing defining a fluid inlet, a fluid outlet, and a poppet chamber communicating between the inlet and the outlet and defining a valve seat therebetween. A movable poppet member is disposed in the poppet chamber and cooperates therewith to define a biasing chamber oppositely disposed from the fluid inlet. The poppet member includes a poppet surface operable to engage the valve seat when the poppet member is in the closed position. The poppet surface includes a first poppet area exposed to the inlet and a second poppet area blocked from the inlet when the poppet member in the closed position.

System pressure is communicated from the fluid inlet to the biasing chamber to urge the poppet member toward the closed position. The poppet member defines a biasing area exposed to fluid pressure in the biasing chamber, the first poppet area being slightly greater than the biasing area to define a first differential area. A spring is disposed in the biasing chamber, operable to exert a biasing force to urge the poppet member toward the closed position. The biasing force of the spring, when the poppet member is in the closed position, is equal to the product of the first differential area and a predetermined maximum pressure setting. A system pressure greater than the maximum setting overcomes the biasing force of the spring and moves the poppet member away from the closed position to also expose the second poppet area to system pressure, which, acting on both of the first and second poppet areas, biases the poppet member to an open position.

The poppet member, in the open position, cooperates with the poppet chamber and the fluid outlet to define a restricted flow path from the inlet to the outlet. The system flow passing through the restricted flow path permits fluid pressure in the inlet to decrease to approximatey a predetermined minimum pressure. The first and second poppet areas together are greater than the biasing area to define a second differential area. The biasing force of the spring, when the poppet member is in the open position, is equal to the product of the second differential area and the minimum pressure, whereby the poppet member remains in the open position while system flow is maintained.

## BRIEF DESCRIPTION OF THE DRAWINGS

FIG. 1 is a generally schematic illustration of a hydrostatic transmission control system incorporating the power shutdown valve assembly of the present invention.

FIG. 2 is a view, partly in schematic, but primarily in cross section, of the control valve assembly of the invention.

FIG. 3 is an enlarged, fragmentary view, similar to FIG. 2, illustrating in greater detail the structure of the power shutdown valve.

FIG. 4 is a fragmentary view, similar to FIG. 3, illustrating the poppet surface areas.

## DESCRIPTION OF THE PREFERRED EMBODIMENT

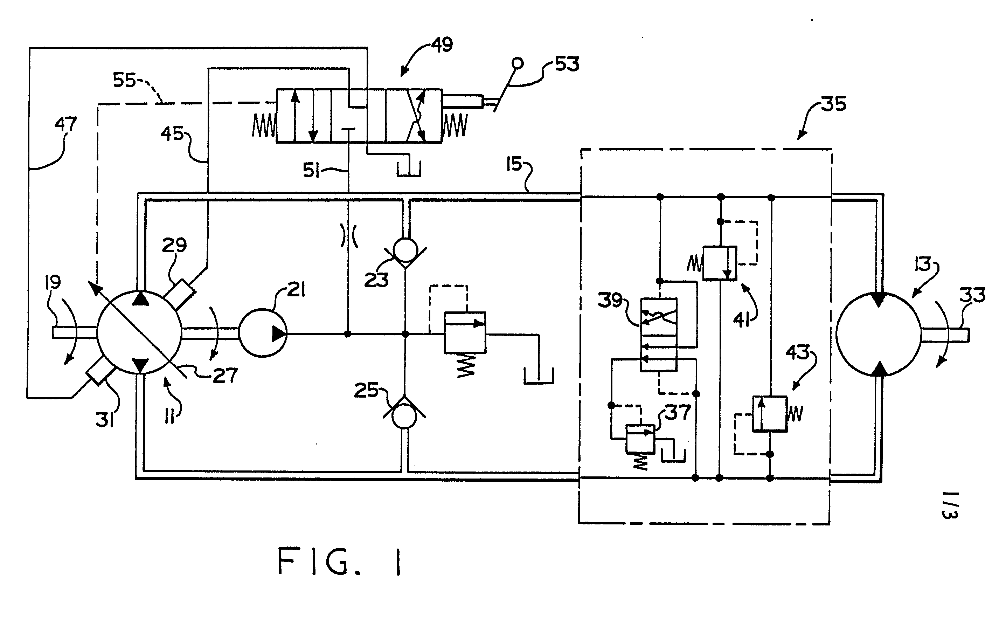

Referring now to the drawings, which are not intended to limit the invention, FIG. 1 illustrates schematically a hydrostatic transmission and control system therefor, including a variable displacement, axial piston pump 11 hydraulically connected to a fixed displacement, axial piston motor 13 by means of a pair of fluid conduits 15 and 17. Pump 11 may be of a well known type, and includes an input shaft 19 which is used to drive the rotating group of the pump 11, and also to drive a charge pump 21 which is hydraulically connected by means of check valves 23 and 25, respectively, to conduits 15 and 17. Pump 11 also includes a swashplate 27 which is movable over-center by means of a pair of stroking cylinders 29 and 31, as is well known in the art.

The motor 13 includes an output shaft 33 which, typically, is connected to some sort of vehicle accessory device (not shown), such as a winch, conveyor, etc. Hydraulically connected in parallel with the motor 13 is a control valve assembly, generally designated 35. The control valve assembly 35 includes a low pressure relief valve 37, a shuttle valve 39, and a pair of power shutdown valves 41 and 43. For simplicity, the power shutdown valves 41 and 43 are illustrated schematically in FIG. 1 in the same manner as relief valves.

The stroking cylinders 29 and 31 are hydraulically connected by means of conduits 45 and 47, respectively, to a main manual control valve 49. A conduit 51 communicates between the output of the charge pump 21 and the inlet of the control valve 49, as is well known in the art. Control valve 49 includes a manual control lever 53, and a follow-up linkage 55 connecting the valve spool of the control valve 49 with the swashplate 27, to center the valve spool when the position of the swashplate 27 matches the desired position, as determined by the position of the control lever 53.

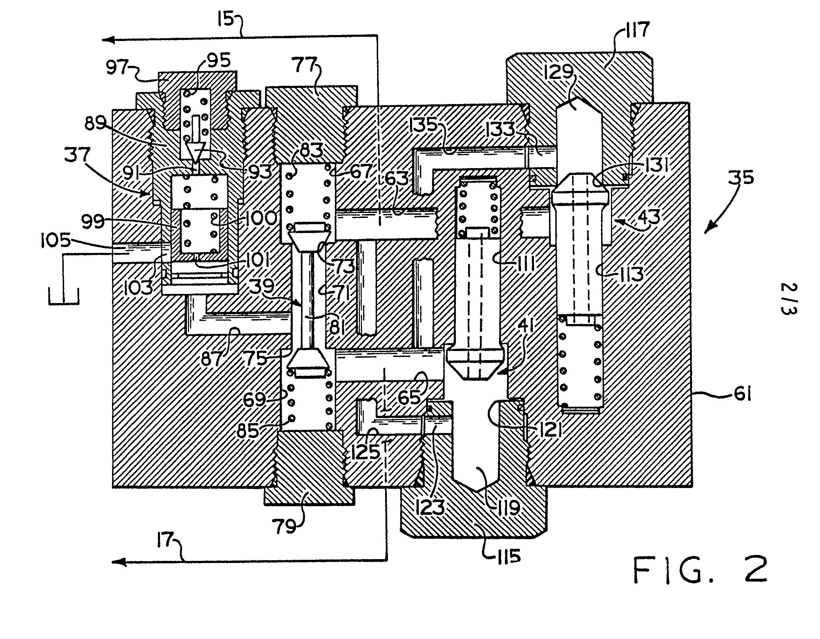

Referring now to FIG. 2, the control valve assembly 35 will be described in greater detail. The valve assembly 35 includes a housing 61 defining a passage 63 in fluid communication with the fluid conduit 15, and a passage 65 in fluid communication with the conduit 17. The passages 63 and 65 are in fluid communication with a pair of enlarged bore portions 67 and 69, respectively. The bore portions 67 and 69 are interconnected by a smaller bore portion 71, the bore portions 67 and 71 cooperating to define a valve seat 73 and the bore portions 69 and 71 cooperating to define a valve seat 75.

The bore portion 67 is closed by means of a plug 77 which is in threaded engagement with the housing 61. Similarly, the bore portion 69 is closed by means of a plug 79 which is in threaded engagement with the housing 61. Disposed within the bore portions 67, 69, and 71 is a shuttle valve member 81, biased toward engagement with valve seat 73 by a spring 83, and biased toward engagement with valve seat 75 by a spring 85.

In fluid communication with the smaller bore portion 71 is a low pressure fluid passage 87 which, in turn, is in fluid communication with the low pressure relief valve 37. The relief valve 37 includes a casing member 89 in threaded engagement with the housing 61 and defining a pilot orifice 91. A pilot valve member 93 is biased by a spring 95 into a position blocking flow through the pilot orifice 91. The spring 95 is seated within a bore defined in a plug member 97, which is in threaded engagement with the casing member 89. Also disposed within the casing member 89 is a relief poppet 99 defining a small bore 101. The wall of the casing member 89 defines an opening 103 which is aligned with a relief passage 105. The relief passage 105 may be connected to any region of low pressure fluid, but preferably is connected to the case drain circuit of the motor 13, if the control valve assembly 35 is mounted on the motor 13 as in FIG. 1.

The function and operation of the shuttle valve 39 and low pressure relief 37 will now be described. Assuming that fluid pressure is being communicated to the motor 13 through fluid conduit 15, and that fluid conduit 17 contains low pressure fluid, high pressure (system pressure) will be present in passage 63 and bore 67. High pressure in bore 67 will bias shuttle valve member 81 downwardly in FIG. 2 into engagement with valve seat 73, in opposition to spring 85. At the same time, the shuttle valve member 81 will be disengaged from the valve seat 75, permitting relatively unrestricted communication between low pressure fluid passage 87 and passage 65, which is in communication with low pressure fluid conduit 17. If the output pressure of the charge pump 21, or any other portion of the low pressure side of the system, exceeds a certain maximum pressure (e.g., 300 psi), such fluid pressure is communicated to the passage 65, then past the shuttle valve member 81, through the bore portion 71, and through the passage 87 to the low pressure relief valve 37.

Fluid pressure above the preset maximum acts on the pilot valve member 93, in opposition to the force of spring 95, to unseat the pilot valve 93. The result is a small pilot flow from the passage 87, through the bore 101, then through the pilot orifice 91 to a region of low pressure (not shown in FIG. 2). This pilot flow through the bore 101 creates a pressure differential across the relief poppet 99 moving it upward in FIG. 2 to uncover the opening 103, and permitting sufficient flow of fluid from the low pressure passage 87, through the relief passage 105 to case drain, such that the fluid pressure in the low pressure side of the system is reduced to the preset maximum, at which point the pilot valve 93 reseats. When the pilot valve 93 reseats, pilot flow is blocked, eliminating the pressure differential across bore 101 and spring 100 returns the relief poppet 99 to its closed position blocking flow from the low pressure side of the system to the motor case drain.

### Power Shutdown Valves

Referring still to FIG. 2, the power shutdown valves 41 and 43 which comprise the essential features of the present invention will now be described. The valve housing 61 defines a pair of stepped bores 111 and 113. The bores 111 and 113 are closed by a pair of plugs 115 and 117, respectively, which are in threaded engagement with the housing 61. The plug 115 defines a central bore 119 which terminates at a valve seat 121. The plug 115 also defines an opening 123 providing communication between the bore 119 and a passage 125 which communicates with the passage 63. Similarly, the plug 117 defines a central bore 129 which terminates at a valve seat 131. The plug 117 also defines an opening 133 to provide communication between the bore 129 and a passage 135 which communicates with the passage 65.

It should be noted that the passage 65 communicates with the stepped bore 111 downstream of the valve seat 121, and that the passage 53 communicates with the stepped bore 113, downstream of the valve seat 131.

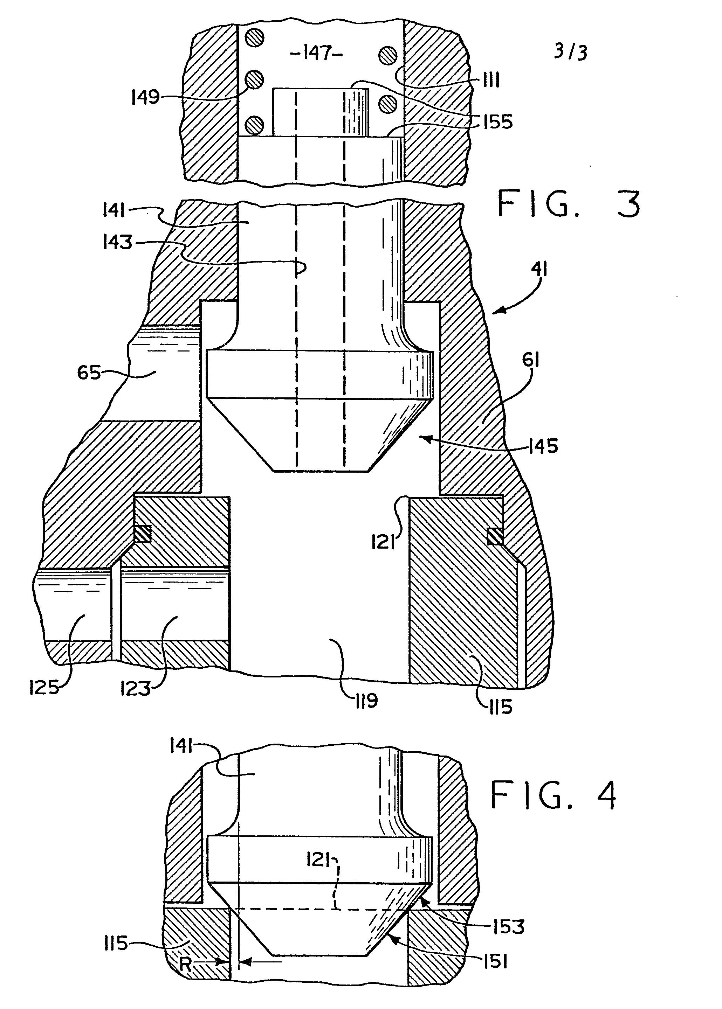

Referring now to FIG. 3, in conjunction with FIG. 2, the structure and operation of the power shutdown valves 41 and 43 will be described in greater detail. Because. the power shutdown valves 41 and 43 are identical in structure and function, only valve 41 is illustrated in FIG. 3, and will be described hereinafter. It should be understood that power shutdown valve 43 would operate in the same manner as valve 41, whenever fluid conduit 17 contains system pressure.

The power shutdown valve 41 includes a poppet member 141, disposed within the stepped bore 111, and movable axially therein. The poppet member 141 defines an axial bore 143, and includes a poppet surface 145. The poppet member 141 cooperates with the bore 111 to define a biasing chamber 147 within which is a spring member 149, operable to bias the poppet member 141 toward a closed position in which the poppet surface 145 engages the valve seat 121 (see FIG. 4).

Referring now to FIG. 4, in conjunction with FIG. 3, it may be seen that when the poppet member 141 is in the closed position, engagement of the poppet surface 145 with the valve seat 121 divides the poppet surface 145 into a pair of poppet areas 151 and 153. In the closed position of the poppet member 141, the poppet area 151 is exposed to system pressure in the fluid conduit 15, through the passages 63 and 125, and the opening 123 and bore 119. At the same time, the poppet area 153 is blocked from fluid pressure in the conduit 15, but is exposed to fluid pressure in the conduit 17, through the passage 65, and the portion of the stepped bore 111, downstream of the valve seat 121. The poppet member 141 also defines a biasing area 155, which is subject to fluid pressure in the biasing chamber 147 to aid the spring 149 in biasing the poppet member 141 toward the closed position. The biasing area 155 is effectively the cross sectional area of the poppet member 141, minus the area of the axial bore 143. Similarly, the area of the poppet area 151 is effectively the cross sectional area within the valve seat 121, minus the area of the axial bore 143.

As may best be seen in FIG. 4, the radius of the valve seat 121 exceeds the radius of the poppet member 141 by a slight amount, which is exaggerated for ease of illustration in FIG. 4 and labeled "R". The result of poppet area 151 being slightly greater than biasing area 155 is a first differential area. When the poppet member 141 is in the closed position, both the poppet area 151 and the biasing area 155 are exposed to system pressure. The first differential area, and the biasing force of the spring 149, are selected such that whenever system pressure is less than a predetermined maximum pressure setting (e.g., 5000 psi), the force of spring 149 biasing the poppet member 141 toward the closed position is greater than the force of system pressure acting on the first differential area to bias the poppet member 141 toward an open position. It is one important feature of the present invention that the first differential area be sufficiently small that the spring 149 may be relatively light, for example, a biasing force equivalent to about 10# when the poppet member is closed and the spring 149 is fully extended. The significance of the use of a relatively light spring will be described subsequently. Therefore, the poppet member 141 remains in the closed position at all system pressures below the predetermined maximum pressure setting.

When system pressure exceeds the example pressure setting of 5000 psi, the biasing force of system pressure acting on the first differential area overcomes the biasing force of the spring 149 and begins to move the poppet member 141 upward in FIGS. 2-4, away from the closed position. Immediately, poppet area 153 is also exposed to the system pressure above the maximum setting. Therefore, there now exists a second differential area across the poppet member 141. This second differential area is the sum of poppet areas 151 and 153 minus biasing area 155, and it is an important feature of the present invention that the second differential area is substantially greater than the first differential area, preferably by a factor of at least 10. In the subject embodiment, the second differential area is greater than the first differential area by a factor of approximately 25.

System pressure acting on the second differential area will overcome the biasing force of the spring 49 to move the poppet member 141 to an "open" position. It should be understood that what constitutes the "open" position of poppet member 141 will depend upon the system flow rate at the moment of operation. If the vehicle operator has set the control lever 53 to select maximum system flow, the open position of the poppet member 141 will be the fully retracted position illustrated in FIG. 2. On the other hand, if the vehicle operator has set the control lever 53 at some intermediate position to select less than maximum system flow, the open position of the poppet member 141 will be some partially retracted position, such as that illustrated in FIG. 3. The primary reason for the open position of the poppet member being determined by instantaneous system flow is that the flow path from the bore 119, past the valve seat 121 to the passage 65 is sufficiently restricted that the fluid pressure in the stepped bore 111 acting on the poppet areas 151 and 153 is kept substantially above the fluid pressure in the passage 65. As soon as the poppet member moves to its open position as described above, there is sufficient fluid communication established with the low pressure side of the system through passage 65 to relieve the excess fluid pressure present in the fluid conduit 15, the passages 63 and 125 ana the bore 119. As may best be seen in FIG. 3, the flow path past the poppet surface 145 to the passage 65 is sufficiently restricted to maintain a pressure drop, . whereby the upstream pressure acting on the poppet areas 151 and 153 maintains the poppet member in the open position while the full system flow passes through the restricted flow path to the passage 65. At the same time, the upstream pressure acting on the poppet areas 151 and 153, which is the same as the pressure in the fluid conduit 15, is preferably below the pressure required to operate the hydraulic motor 13. Therefore, the opening of the power shutdown valve 41 has the effect of shutting down hydraulic power input to the motor because, preferably, all of the system flow is through the power shutdown valve, with no flow passing through the motor.

It is an important feature of the present invention that when the power shutdown valve 41 opens, the fluid pressure upstream of the poppet member will decrease to approximately a predetermined minimum pressure. As will be understood by those skilled in the art, this predetermineo minimum pressure is inversely proportional to the flow area of the restricted flow path to the passage 65. It is believed to be within the ability of those skilled in the art to select the dimensions of the stepped bore 111, the poppet member 141, etc., such that the predetermined minimum pressure will be maintained upstream of the poppet member, for any given system flow rate. The significance of the selection of the first differential area to permit the use of a light spring 149 may now be understood, as it relates to the ability of the power shutdown valve to permit passage of the entire system flow rate, but at a relatively low pressure drop across the poppet surface 145.

By way of example only, assuming that the predetermined maximum pressure setting of the power shutdown valve is 5000 psi and that the second differential area is greater than the first differential by a factor of approximately 25, it may be determined that the predetermined minimum pressure is about 200 psi, based upon the known relationship that the spring force is equal to the product of the differential area and the pressure setting.

By way of further example, and to illustrate the functional advantages of the power shutdown valve of the present invention, it will be assumed that the system flow rate is 30 gpm. If the control valve assembly 35 included conventional high pressure relief valves, an increase in system pressure above 5000 psi would result in a flow over the pressure relief valve of 30 gpm, at a pressure drop of 5000 psi. The hydraulic horsepower thus consumed can be determined from the following equation:

$$HP = \frac{P \times Q}{1714} ;$$

wherein HP is the horsepower; P equals the pressure drop in psi; and Q equals the flow rate in gpm. Therefore, using a conventional relief valve, the horsepower consumption would be as follows:

$$HP \text{ (relief valve)} = \frac{5000 \times 30}{1714} = 87 \text{ hp.}$$

By using the power shutdown valve of the present invention, the pump output pressure is reduced from 5000 psi to 200 psi, and the hydraulic horsepower consumed by the power shutdown valve during the shutdown condition may be determined as follows:

$$HP \text{ (shutdown valve)} = \frac{200 \times 30}{1714} = 3.5 \text{ hp.}$$

Accordingly, it may be seen that the use of the power shutdown valve of the present invention would result, in the example above, in a 96 percent saving of hydraulic horsepower during the shutdown condition. As mentioned in the background of the present specification, the horsepower consumed in pumping high pressure fluid over a relief valve is converted into heat, substantially raising the temperature of the hydraulic fluid. Thus, it may be seen that the use of the power shutdown valve of the invention substantially eliminates a major cause of overheating of the hydraulic fluid, and a potential cause of pump or motor failure.

Typically, the vehicle operator will become aware that the system is operating in the power shutdown mode when he sees that the accessory device being driven by the motor 13 is no longer operating. The operator will then move the control lever 53 to the neutral or zero flow position, and then do whatever is necessary to remove the cause of the power shutdown, such as removing foreign matter which may be clogging the accessory device. When the operator sets the control lever 53 to neutral, the pump is destroked, and system flow drops to zero. As the system flow past the poppet member decreases, the pressure drop across the poppet surface also decreases, and the force of the biasing spring 149 is effective to bias the poppet member toward the closed position. Only when the system flow approaches zero does the pressure drop across the poppet surface decrease sufficiently to permit the poppet member to reseat. When the poppet member reseats, i.e., the poppet surface 45 engages the valve seat 121, only the first differential area is exposed to system pressure, such that the operator can again stroke the pump and select the desired system flow rate, and if the original cause of the power shutdown condition has been removed, the system will again operate in the normal manner, with the power shutdown valve remaining in the closed condition of FIG. 4.

It should be apparent from the foregoing specification that the present invention provides a power shutdown valve which is operable to relieve excessive system pressure, without dumping system flow at a pressure corresponding to the maximum pressure setting. In addition, the power shutdown valve of the present invention maintains the shutdown condition, at the relatively lower pressure, while passing full system flow, until the system flow rate is reduced to approximately zero, at which point the power shutdown valve reseats and it is again ready for normal operation. It is believed that certain modifications and alterations of the preferred embodiment will occur to others upon a reading and understanding of the specification, and it is my intention to include all such modifications and alterations as part of the invention, insofar as they come within the scope of the appended claims.

WHAT IS CLAIMED IS:

1. A control valve assembly for use in a system including a source of pressurized fluid, a fluid pressure actuated device, high pressure fluid conduit means to communicate a system flow from the source to the device, and a low pressure source of fluid, said control valve assembly comprising:

(a) housing means defining a fluid inlet in communication with the high pressure conduit means, a fluid outlet in communication with the low pressure source, a poppet chamber communicating between said fluid inlet and said fluid outlet, and a valve seat;

(b) a movable poppet member disposed in said poppet chamber and including a poppet surface, said poppet surface including a first poppet area exposed to system pressure in said fluid inlet when said poppet surface engages said valve seat, and a second poppet area disposed radially outwardly of said valve seat and exposed to pressure in said fluid outlet when said poppet surface engages said valve seat;

(c) said poppet member defining a biasing area, said biasing area cooperating with said poppet chamber to define a biasing chamber, means to communicate system pressure fluid to said biasing chamber to exert a force on said biasing area urging said poppet surface into engagement with said valve seat, said first poppet area being slightly greater than said biasing area;

(d) spring means operable to exert a biasing force on said poppet member to urge said poppet surface into engagement with said valve seat at all system pressures below a predetermined maximum pressure setting, a high system pressure at least equal to said maximum pressure setting exerting a net biasing force on said poppet member sufficient to overcome the biasing force of said spring means and move said poppet surface out of engagement with said valve seat to expose said second poppet area to said high system pressure;

(e) said high system pressure acting on said first and second poppet areas to bias said poppet member to an open position;

(f) said poppet member, in said open position, cooperating with said poppet chamber and said fluid outlet to define a restricted flow path from said fluid inlet, past said valve seat, to said fluid outlet, the system flow passing through said restricted flow path permitting fluid pressure in said fluid inlet to decrease to approximately a predetermined minimum pressure, said minimum pressure acting on said first and second poppet areas to maintain said poppet member in said open position while the system flow is maintained, a decrease in the system flow resulting in a decrease in the pressure differential across said restricted flow path, permitting said poppet member to move said poppet surface toward engagement with said valve seat.

2.    A control valve assembly for use with a hydrostatic transmission including a fluid pump, a fluid motor, and high pressure and low pressure fluid conduit means to communicate a system flow between the pump and the motor, said control valve assembly comprising:

(a)    housing means defining a fluid inlet in communication with the high pressure conduit means, a fluid outlet in communication with the low pressure fluid conduit means, and a poppet chamber communicating between said fluid inlet and said fluid outlet, and defining a valve seat therebetween;

(b)    a movable poppet member disposed in said poppet chamber and cooperating therewith to define a biasing chamber oppositely disposed from said fluid inlet, said poppet member including a poppet surface operable to engage said valve seat when said poppet member is in a closed position, said poppet surface including a first poppet area exposed to said fluid inlet, and a second poppet area blocked from said fluid inlet, when said poppet member is said closed position;

(c)    means to communicate system pressure fluid from said fluid inlet to said biasing chamber to urge said poppet member toward said closed position, said poppet member defining a biasing area exposed to fluid pressure in said biasing chamber, said first poppet area being slightly greater than said biasing area to define a first differential area;

(d)    spring means disposed in said biasing chamber, operable to exert a biasing force to urge said poppet member toward said closed position, the biasing force of said spring means, when said poppet member is in said closed position, being equal to the product of said first differential area and a predetermined maximum pressure setting, a system pressure greater than said maximum pressure setting being operable to overcome the biasing force of said spring means and move said poppet member away from said closed position to also expose said second poppet area to said system pressure, said system pressure acting on both of said first and second poppet areas to bias said poppet member to an open position;

(e) said poppet member, in said open position, cooperating with said poppet chamber and said fluid outlet to define a restricted flow path from said inlet to said outlet, the system flow passing through said restricted flow path permitting fluid pressure in said fluid inlet to decrease to approximately a predetermined minimum pressure, said first and second poppet areas together being greater than said biasing area to define a second differential area, the biasing force of said spring means, when said poppet member is in said open position, being equal to the product of said second differential area and said minimum pressure, whereby said poppet member remains in said open position while the system flow is maintained.

3. A power shutdown valve assembly for use with a hydrostatic transmission incluaing a fluid pump, a fluid motor, and first and second fluid conduit means to communicate a system flow between the pump and the motor, said power shutdown valve comprising:

(a) housing means defining first and second fluid inlets in communication with the first and second fluia conauit means, respectively, first and second fluid outlets in communication witn the second and first fluid conduit means, respectively, and first and second poppet chambers communicating between said first fluid inlet and said fluid outlet and between said second fluid inlet ana saia second fluid outlet, respectively, and aefining first and second valve seats, respectively;

(b) tirst and second movable poppet members disposed in said first and second poppet chambers, respectively, to comprise first and second poppet valve assemblies, each of said poppet valve assemblies further comprising:

(i) saia poppet member and said poppet chamber cooperating to define a biasing chamber oppositely disposed from said fluid inlet, said poppet member including a poppet surface operable to engage said valve seat when said poppet member is in a closed position;

(ii) saia poppet surface including one poppet area exposed to said fluia inlet and another poppet area blocked from said fluid inlet when said poppet member is in saia closed position;

(iii) means to communicate fluid from saia fluid inlet to said biasing chamber to urge said poppet member toward said closed position, saia poppet member aefining a biasing area

exposed to fluid pressure in said biasing chamber, said one poppet area being slightly greater than said biasing area to define a differential area;

(iv) spring means disposed in said biasing chamber, operable to exert a biasing force to urge said poppet member toward said closed position, the biasing force of said spring means being approximately equal to the product of said differential area and a predetermined maximum pressure setting, a fluid pressure in said fluid inlet greater than said maximum pressure setting being operable to overcome the biasing force of said spring means and move said poppet member away from said closed position to expose said another poppet area to said fluid pressure, said pressure acting on both of said poppet areas to bias said poppet member to an open position;

(v) said poppet member, in said open position, cooperating with said poppet chamber to define a restricted flow path from said inlet to said outlet, the system flow passing through said restricted flow path permitting fluid pressure in said fluid inlet to decrease to approximately a predetermined minimum pressure, said minimum pressure acting on said one and said another poppet areas to maintain said poppet member in said open position while system flow is maintained.

4. A valve assembly as claimed in claim 1, 2, or 3 wherein said poppet surface is generally frusto-conical .

**0059485**

5.  A valve assembly as claimed in claim 1, 2, or 3 wherein said poppet member defines an axial bore permitting relatively unrestricted fluid communication between said fluid inlet and said biasing chamber.

6.  A valve assembly as claimed in claim 1 or 2 wherein said second differential area is greater than said first differential area by a factor of at least 10.

FIG. 1

2/3

FIG. 2

0059485

3/3

-147-

149

111

155

FIG. 3

141

143

41

65

61

145

121

125 123 119 115

141

FIG. 4

121

115

153

R

151

0059485

European Patent
Office

EUROPEAN SEARCH REPORT

Application number

EP 82 10 1693.8

## DOCUMENTS CONSIDERED TO BE RELEVANT

| Category | Citation of document with indication, where appropriate, of relevant passages | Relevant to claim |
|---|---|---|
| Y | US - A - 1 994 974 (E. WIEDMANN) | 1-3 |
| A | * page 1, right-hand column, line 42 to page 2, left-hand column, line 41; fig. 1 * | 6 |
| | -- | |
| Y | DE - A1 - 2 424 272 (H. FLEISCHER) | 1-3 |
| A | * page 10, line 15 to page 11, line 22; page 13, lines 10 to 17; fig. 1, 3 * | 5 |
| | -- | |
| A | AT - B - 265 787 (J.M. VOITH) | 1,2 |
| | * complete document * | |
| | -- | |
| A | US - A - 3 744 244 (J.R. SWOAGER) | |
| | ---- | |

CLASSIFICATION OF THE APPLICATION (Int. Cl. ³)

F 16 K   31/363
F 16 H   39/44

TECHNICAL FIELDS SEARCHED (Int.Cl. ³)

F 16 H   39/00
F 16 K   31/00

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 26-04-1982 | LEMBLE |